Europäisches Patentamt

European Patent Office

Office européen des brevets

(11) Publication number: **0 496 061 A2**

## EUROPEAN PATENT APPLICATION

(21) Application number: **91120435.2**

(22) Date of filing: **28.11.91**

(51) Int. Cl.⁵: **H04Q 3/66**, H04M 7/00, H04M 3/36

(30) Priority: **30.11.90 US 621448**

(43) Date of publication of application:
**29.07.92 Bulletin 92/31**

(84) Designated Contracting States:
**DE FR GB IT SE**

(71) Applicant: **GTE LABORATORIES INCORPORATED**
**1209 Orange Street**
**Wilmington Delaware 01901(US)**

(72) Inventor: **Gersht, Alexander**
**3 Stock Farm Road**
**Sudbury, MA 01776(US)**
Inventor: **Kheradpir, Shaygan**
**161 Rangely Road**
**Brookline, MA 02167(US)**

(74) Representative: **Patentanwälte Grünecker, Kinkeldey, Stockmair & Partner**
**Maximilianstrasse 58**
**W-8000 München 22(DE)**

(54) **Real-time decentralized network traffic management using a parallel algorithm.**

(57) A decentralized, state dependent access-control and routing strategy for real-time control of circuit switched networks. To decentralize the traffic control tasks, we partition the network into subnets and assign a specific traffic controller to each one. The traffic controllers obtain periodic (approximately every 5 minutes) subnet measurements and compute the optimal traffic control policy of the subnet through an iterative and parallel dialog with the other controllers. Each controller implements the new control policy within its subnet until the next measurement epoch, thereby allowing decentralized call handling. In the formulation of the joint access-control and routing problem, we allocate the incoming demand (for a given period), the optimal strategy to maximize the predicted minimum (over all network Trunk Groups) Trunk Group residual capacity. Secondly, when the projected demand can not be accommodated through this strategy, the optimal strategy rejects the extra demand at source, in an "equitable" manner. The mathematical formulation of the above routing and access-control objectives leads to an Equilibrium Programming Problem (EPP). The EPP formulation is decomposed into a number of subproblems and solved--in parallel--by the inter-communicating subnet controllers, thereby satisfying real-time control requirements. The ensemble of the subproblem solutions forms the network-wide (globally) optimal traffic management strategy for the upcoming period.

EP 0 496 061 A2

**FIG. I**

2

This application is related to another application entitled "A PREDICTIVE ACCESS-CONTROL AND ROUTING SYSTEM FOR INTEGRATED SERVICES TELECOMMUNICATION NETWORKS," European Serial No.90103904.0, filed February 28, 1990, by the same applicant.

This invention pertains generally to the field of telecommunications, and in particular to network management and control systems. Specifically, it discloses a state-dependent, access-control and routing strategy for real-time decentralized control of network traffic for circuit switched networks.

Traffic control policies devised for the Public Switched Telephone Network (PSTN) of today are based on assumptions of stability, predictability, and homogeneity of the offered traffic. Accordingly, the PSTN traffic control structure is comprised of an open-loop and a closed-loop part. The traffic control procedure in the open-loop part is as follows: the day is divided into a number of time periods, during which the traffic patterns are assumed well-understood, and a different set of pre-planned "optimal" traffic control schemes is devised for each period. Human network managers control the network traffic in real-time (hence closing the loop) by modifying the pre-planned control schemes in case of "rare" events such as failures or when traffic loads exceed the engineered levels. Network managers' control decisions are based, typically, on a combination of past experiences and heuristics. Their control decisions are implemented in the network using a "rigid" set of controls which, for the most part, are localized in scope. Cf. "The network management handbook," Bell Communication Research Publications, ST-TAP-000036, 1987.

Recently, it has been suggested that the above method of network control may be inappropriate for the increasingly volatile and heterogeneous traffic environments of the future, as discussed in the cross-referenced application, partly due to: the introduction of new services with unknown traffic characteristics; the unexpected/uncontrolled behavior of exogenous traffic generated by other Local Access Transport Areas (LATAs), Inter-Exchange Carriers (ICs), or Private Virtual Networks (PVNs); and sudden bursts in the offered traffic due to events such as media generated focused calling, natural disasters, or emergency situations. Uncertainty in and complexity of such traffic profiles may require automated, state-dependent traffic controllers that are capable of adapting to volatile traffic conditions in real-time.

To deal with some of the issues outlined above a number of state-dependent traffic control schemes have been proposed in recent years. Two of these schemes which have been implemented are Dynamically Controlled Routing (DCR), (Cf. W. H. Cameron, S. Hurtubise, "Dynamically Controlled Routing," Telesis, Vol. 13, No. 1, 1986), and Dynamic Non-Hierarchical Routing (DNHR). (Cf. G. R. Ash et al, "Design and optimization of networks with dynamic routing," Bell System Technical Journal, pp. 1787-1820, October 1981.) Both routing schemes i) are adaptive (state dependent); ii) use a flat routing structure in place of the traditional method of Fixed Hierarchical Routing; iii) perform best when they are provided with frequent (approximately 10 seconds) network updates; and iv) assign one primary (direct) route with one or more overflow routes for each call.

Both DCR and DNHR tend to maximize the network Trunk Group (TG) residual capacity in real-time. In A. Gersht, A. Shulman, "Optimal Routing on Circuit Switched Communication Networks," IEEE Transactions on Communications, Vol. 37, November, 1989, another non-hierarchical adaptive routing strategy was introduced which maximizes the network residual capacity explicitly. In this strategy, one route is assigned for each Source-Destination (SD) pair for each (10 seconds) updating period; an arriving call which can not be accommodated on this route is blocked. The assigned route has the maximum residual capacity, measured in real-time, amongst all other (pre-defined) routes of a SD pair.

To successfully operate in volatile traffic conditions, the above control strategies require frequent network updating information. This is considered a shortcoming of such techniques, as frequent updates may lead to large measurement overhead. Furthermore, in volatile or extreme traffic conditions, these schemes rely on separate routing and call access-control practices which are based typically on heuristics, and do not, in general, follow their nominal traffic control objectives. In addition, the access-control techniques used by many of these schemes are reactive and are triggered only when congestion has already occurred in the network.

In the cross-referenced application, a centralized, Predictive Access-control and Routing Strategy (PARS) was developed. PARS integrates access-control and routing functions, thereby taking another step toward automation of network traffic control. PARS is designed to operate in uncertain network traffic environments with updating periods of the order of call holding time (say 5 minutes); consequently, it does not require as frequent network status updates as the previous schemes. PARS estimates the fraction of SD demands which can be accommodated on network TGs during the updating period, using predictions of offered SD traffic demands for that period, and it rejects the remaining fraction at the source. PARS then splits the admitted calls amongst SD routes to optimize the projected performance. Again, as in A. Gersht, A. Shulman, op. cit., no secondary routes are allowed in this scheme.

Even though the above traffic control schemes differ in their approach to traffic control, centrality of decision making is common to all of them; that is, a single traffic controller generates their real-time routing and access-control decisions, using global network state information. However, many network environments require a decentralized approach to traffic management. (Cf. Ash et al., "Integrated Network Controller for a Dynamic Non-Hierarchical Routing Switching Network," United States Patent No. 4,669,113, May 1987; R. Hass and R. Humes, "Intelligent Network/2: A network architecture concept for the 1990s," International Switching Symposium, Phoenix, March 1987.)

For example, networks such as the Defense Switched Network (DSN) (Cf. "System Performance Specification for The Defense Communications Operations Support System," DCS Report, April 1989), and other international networks are comprised of a number of physically segregated subnets, with each subnet sending and receiving a significant amount of traffic to and from other subnets, through gateways. Since the traffic conditions in the subnets are clearly interdependent, their traffic control policies must be likewise. In addition, survivability and reliability of military networks is clearly enhanced through decentralized control.

Large networks (or small networks carrying multiclass service) present another case where decentralized traffic management can be beneficial. In such networks, the automated central controller must consider an enormous number of variables for real-time optimization. For a 40-node network with 4 routes per SD pair, there are approximately 6400 traffic routing variables. For a hundred node network the total number is 40000! To control the traffic in such environments in a cost effective, and timely manner (perhaps less than 30 seconds for an updating period of 5 minutes), it may become necessary to distribute responsibilities for traffic management amongst several network controllers.

According to one aspect of the invention, there is provided a network characterized by real time decentralized state dependent traffic management, comprising: interconnected subnets; and a plurality of traffic controllers, each traffic controller periodically collecting real time state measurements including residual capacities and predicted offered traffic on a corresponding subnet in isolation from the remaining subnets for an upcoming time period; said traffic controllers intercommunicating data representing residual capacities and offered traffic at the end of a time period; intercommunicationg data representing minimum of residual capacity of least congested route between each source-destination pair within each subnet and predicted offered traffic at the end of a time period; said traffic controllers computing, by inclusion of said data, traffic control variables for joint access and routing for their corresponding subnet, thereby handling incoming calls for a following time period.

According to another aspect of the invention, there is provided a method for real time decentralized state dependent traffic management of a network divided into subnets, comprising the steps of: periodically collecting real time state measurements including residual capacities and predicted offered traffic on a corresponding subnet in isolation from the remaining subnets for an upcoming time period; intercommunicating data between subnets representing minimum of residual capacity of least congested route between each source-destination pair within each subnet and predicted offered traffic at the end of a time period; and computing, by includion of said data, traffic control variables for handling arriving calls joint access and routing for each subnet, thereby handling incoming calls for a following time period.

In the drawings:

Fig. 1 is a block diagram illustrating the operational principles of the traffic control strategy for a single subnet;

Fig. 2 is a diagrammatic illustration of the interaction between routing and access control;

Fig. 3 is a flow diagram of the optimization algorithm, according to an embodiment of the invention;

Fig. 4 is a diagrammatic illustration of the solution procedure for routing, according to the preferred embodiment of the invention;

Fig. 5 is a diagrammatic illustration of the solution procedure for routing and access control, according to the preferred embodiment of the invention;

Fig. 6 is a diagrammatic illustration of a network partitioned into four logical physical subnets;

Fig. 7 is a diagrammatic illustration of a simplified network topology having simplified subnet topologies for four subnets;

Fig. 8 is a flow diagram showing the procedures followed by each subnet controller until convergence, according to the preferred embodiment of the invention;

Figs. 9a, 9b, 9c are a diagrammatic illustrations of the procedures of Fig. 8, according to the preferred embodiment of the invention; and

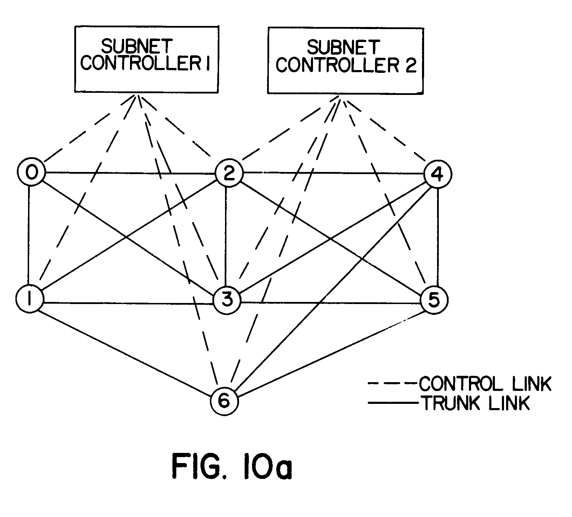

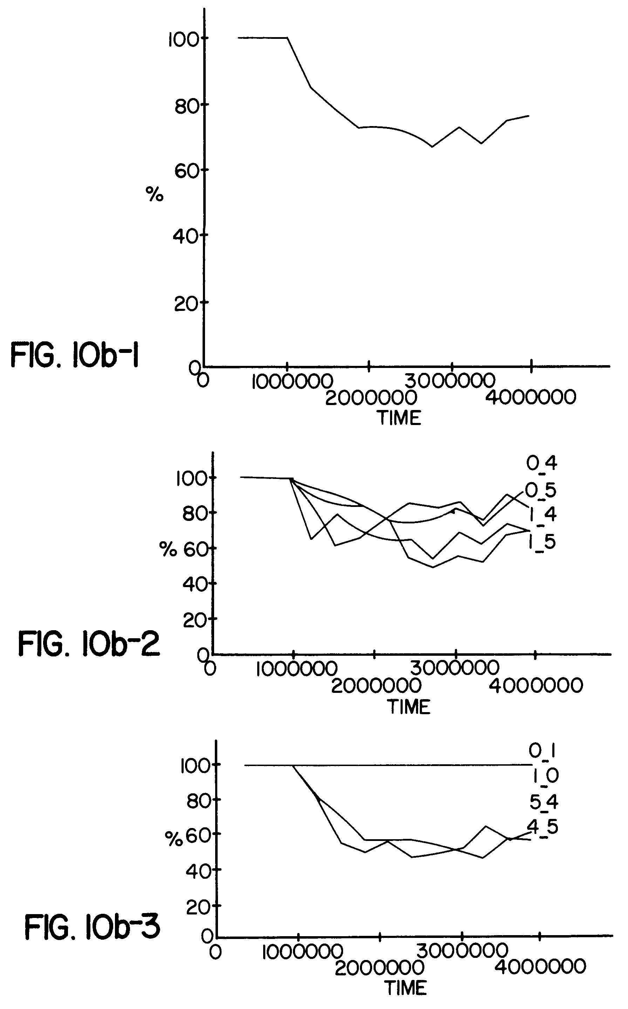

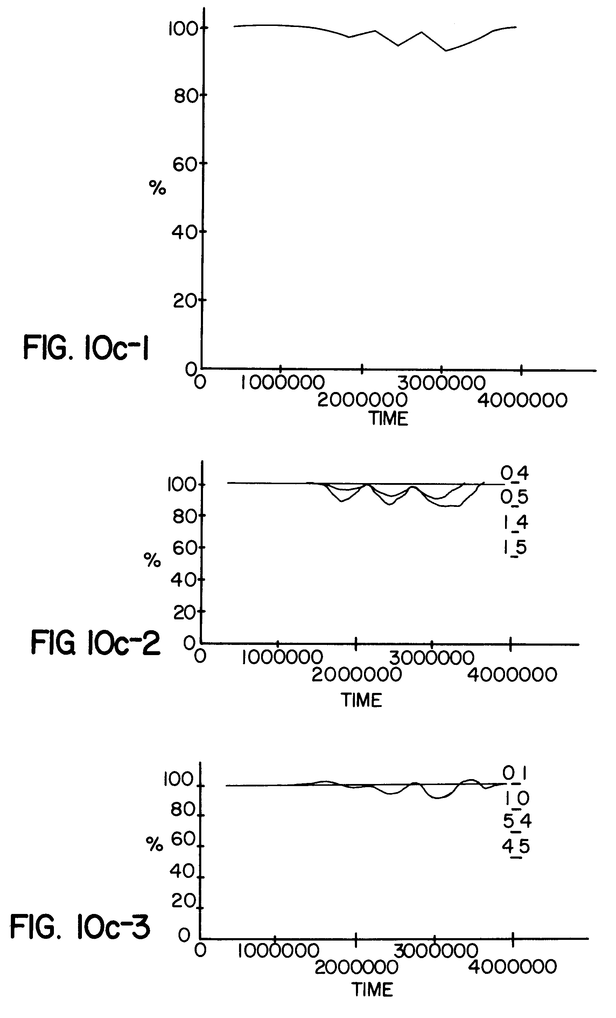

Figs. 10a, 10b and 10c illustrate the results of a simulation of the preferred embodiment of the invention.

A principal object of this invention is to provide a real-time, decentralized state dependent traffic management scheme for physically segregated/large networks. Our scheme integrates the predictive approach of the cross-referenced application with the technique developed in A. Gersht, A. Shulman, op. cit. Thus, as in the cross-referenced application, our traffic control strategy "optimizes" the projected network Trunk Group (TG) occupancies through a combination of routing and access-control activities. The optimal traffic control strategy, computed in real-time for an upcoming interval, is realized using traffic control variables. These variables represent the proportion of the projected offered SD traffic to be assigned for an updating period to each route (or to be rejected at the source). However, in contrast to the centralized strategy of the cross-referenced application, our new formulation of the joint access-control and routing problem can be solved in a decentralized manner and in parallel, by a number of inter-communicating controllers. The latter allows for faster response to changing network traffic conditions.

In the formulation of the joint access-control and routing problem, we consider two objectives for traffic management. First, to accommodate the projected incoming demand (for a given period), the optimal strategy should explicitly maximize the predicted minimum (over all network TGs) TG residual capacity. In doing so, the traffic controller "balances" network TG loads, thereby decreasing the chance of blockage on network TGs that could result from "upward" TG load fluctuations.

While the first objective is involved with "optimal" routing of the projected load, our second objective in traffic management relates to access-control; i.e., protection of network switching systems against congestion in periods of extreme overload. When the projected incoming load can not be accommodated by routing (i.e. the maximum minimum TG residual capacity is zero) the optimal strategy should reject the extra demand at the source, and in an "equitable" manner from SD pairs' viewpoint . We capture this objective by minimizing the maximum fraction of projected blocked traffic across network SD pairs.

Mathematical formulation of the above routing and access-control objectives leads to an Equilibrium Programming Problem (EPP) (Cf. C. Garcia, W. Zangwill, "Pathways to Solutions, Fixed Points, and Equilibria," Prentice-Hall Publishers, 1981). The EPP describes the tradeoff between the routing and access-control objectives. This tradeoff is determined by the following constraints: i) that the projected offered traffic can only be rejected when sufficient network TG capacity is not available to accommodate it; and ii) traffic flow conservation constraints.

For illustration purposes, one may describe our EPP formulation using two interacting, interdependent decision makers: one responsible for routing and another for access-control. As objective functions for both decision makers are placed under common constraints, each decision maker's control action is limited by the other's. The routing decision maker attempts to maximize the minimum residual capacity across network TGs for a given access-control policy; the access-control decision maker, given the routing policy, tries to minimize the maximum fraction of projected blocked traffic across network SD pairs, and is invoked only when the routing decision maker's objective function is zero. In equilibrium programming, this process is continued until both decision makers can no longer improve their respective objective functions.

Equilibrium programming problems are, in general, computationally difficult to solve. However, in the system of this invention, our formulation of this problem (i.e. the optimal access-control and routing strategy) can be solved efficiently in a centralized or decentralized manner. Our solution algorithms are both simple and computationally efficient, and allow for real-time implementation via massive introduction of parallel processing.

To implement the decentralized solution technique, we assume that the network is comprised of a number of physical/logical subnets that are connected through gateways/boundary nodes. We assign a unique traffic controller to each subnet, with controllers having view of only their subnet states. The subnet controllers can communicate with each other, and depending upon inter-controller transmission delay, they may be physically collocated or dispersed across the network.

At the beginning of each updating period, subnet controllers i) collect subnet-wide state measurements, ii) compute their subnet's optimal traffic control variables through an iterative dialog -- and in parallel -- with other controllers, and iii) implement the new traffic control strategy within their subnet until the next measurement epoch. Note that, under "normal" conditions (i.e. no failures), no further interactions between subnet controllers takes place until the following measurement epoch.

At the termination of the algorithm, each subnet controller provides for its subnet a set of traffic control variables for the upcoming period. The control variables determine the fractions of SD traffic to be rejected at the source; the fractions of SD traffic to be assigned to each route of a particular SD pair (assuming Signaling System #7 capabilities); and the fractions of the intersubnet traffic to be offered to each gateway.

The ensemble of the subnet traffic control variables form the network-wide optimal traffic management strategy for the upcoming period. The proof of convergence of the algorithm to the network-wide optimum is discussed later. Furthermore, to satisfy real-time requirements, we show how to speed up computations in the decentralized algorithm through parallel processing.

This specification is organized as follows. Since our decentralized solution technique can be explained as a natural extension of its centralized counterpart (the single subnet case), we describe the centralized algorithm first. Accordingly, we describe the operational principles of a subnet controller in isolation; i.e.,

assuming no inter-subnet traffic. Next, we describe the network state prediction technique used both in the centralized and the decentralized algorithm. The formulation of the joint access-control and routing optimization problem follows. We describe the solution technique of the centralized joint access-control and routing problem. This technique is then extended to the decentralized joint access-control and routing problem. We provide some numerical results, and discuss some computational aspects of the algorithm.

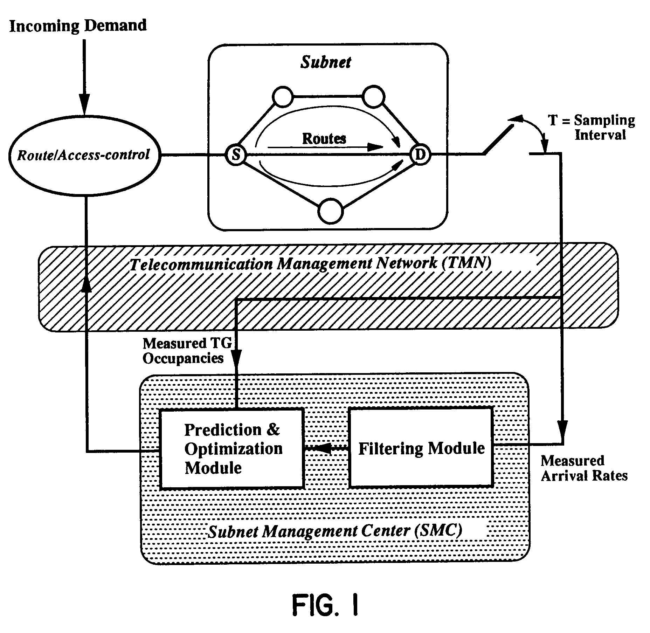

FIG. 1 illustrates the operational principles of traffic control strategy for a single subnet. The subnet is controlled using a "sampled data" structure: the subnetwork controller decisions are based upon periodic measurements of subnet states and are implemented during the upcoming measurement interval using traffic control variables. These variables represent the proportions of the incoming SD traffic flows to be assigned to each route/to be rejected at source. That is, the variables represent both the routing and the access-control policy. Note that, the routing structure is non-hierarchical with no provisions for overflow traffic: traffic not allocated on a chosen route is blocked.

The subnet controller resides in the Subnetwork Management Center (SMC). Stored at the SMC are the connectivity matrix of the subnet, and a set of a priori defined routes--the route set--for each Source-Destination (SD) pair together with their respective traffic control variables. (The route set may be adjusted on an multihour basis.) Every T minutes, each subnet switch sends the current state to the SMC through the Telecommunication Management Network (TMN), where the state is defined as the number of busy circuits on its outgoing TGs. In addition to instantaneous TG occupancies, subnet end offices transmit (to the SMC) the number of service requests to all destinations during the preceding T minutes.

At SMC, the SD service attempt rates are first filtered to remove "noise" due to statistical fluctuations. Then, using the instantaneous TG occupancy levels, the service attempt rates, the network topology, and the route set, the control algorithm projects (T minutes ahead) the future TG occupancy levels as a function of routing and access-control. Based on the state projections, the traffic control algorithm computes a control policy that would result in "optimal" subnet traffic behavior during the upcoming interval. The SMC then relays the "optimal" traffic control variables to network switches to handle all the traffic within its subnet during the following T minutes accordingly.

Next, we will describe the data filtering and projection techniques used by the optimization algorithms (centralized/decentralized).

We use the following differential equation for estimating the load $\hat{x}$ on an uncapacitated TG for a given updating period:

$$\frac{d}{dt} \hat{x}(t) = -\mu \, \hat{x}(t) + \lambda h \, \hat{x}(t_0) = z(t_0). \qquad (1)$$

In Eq. 1, we assume poisson arrivals with rate $\lambda$ onto the TG, exponential service times with the rate $\mu$ such that each call departs at a uniform rate of $\mu$, and constant control h. The differential equation (1) is initialized by the the measured TG occupancy level $z(t_0)$.

Given the network topology and SD route sets, we formulate the predicted load levels for all network TGs (assuming unlimited capacity) as a function of routing and access-control as follows:

$$\hat{x}_k(t+T) = e^{-\mu T} z_k(t) + (1-e^{-\mu T})/\mu \sum_{ij \in S} \left\{ \lambda_{sd} \sum_{l=1}^{R_{ij}} h_{ij}^l (\delta_{ij}^l)_k \right\} \qquad (2)$$

$S \quad = \{(i,j)|(i,j) \text{ is a network SD pair}\} \, |S| = N(N-1),$

$L_{ij} \quad = \{r_{ij}|r_{ij} \text{ is a defined route from i to j}\} \, |L_{ij}| = R_{ij}$

$\Omega \quad = \{k \mid k \text{ is a network TG}\}$

where $z_k(t)$ is the number of busy circuits on TG k at time t; $\hat{X}_k(t + T)$ is the predicted number of busy circuits on TG k; N is the total number of SD pairs in the network; $\hat{\lambda}_{ij}(t,t)$ are the filtered SD arrival rates generated recursively by a two-dimensional Kalman Filter; $R_{ij}$ is the number of routes assigned to the SD pair ij;

$$r_{ij}^l$$

is the l$^{th}$ route of the ij SD pair;

$$h^I_{ijt)}$$

is the l$^{th}$ routing variable of the SD pair ij representing the proportion of the incoming ij traffic flow to be assigned to

$$r^I_{ij} \quad ,$$

during the upcoming control interval; and

$$\left(\delta^I_{ij}\right)_k$$

is an indicator function with the value of 1 if

$$r^I_{ij}$$

passes through TG k, and 0, otherwise.

To incorporate access-control variables into Eq. (2), we introduce a fictitious "trash box" route with unlimited capacity for each SD pair; i.e., SD traffic not admitted into the network will be "routed" to the trash box. We denote the routing variable for the "trash box" route by

$$h^0_{ij}$$

and express the SD flow conservation law as

$$\sum_{l=0}^{R_{ij}} h^l_{ij}(t) = 1 \quad , \qquad h^l_{ij} \geq 0 \qquad (3)$$

The average holding time ($1/\mu$) in Eq. (2) is assumed to remain constant during a time interval that is much longer than the prediction horizon (for example, if the prediction horizon is of the order of minutes, we assume that the average holding time remains constant during a half or one hour period.) Consequently, at time t, the only unknown variables in Eq. (2) are the time varying SD arrival rates.

Since we intend to use Eqs. (1-2) as the basic dynamical model for network load control, a few remarks regarding their accuracy are in order. Note that Eqs. (1-2) estimate more closely the underlying TG load stochastic process when $\rho = \lambda/\mu$ is large. This is based on the fact that, in an M/M/∞ system the ratio of standard deviation to mean tends to zero as the mean tends to infinity. Hence, for large capacity TGs, the fluctuations about the steady-state mean become less significant as the steady-state mean gets closer to the capacity limits--even for non stationary systems. From Eq. (2), the "optimal" control must satisfy TG capacity constraints; i.e., $\hat{X}_k(t+T) \leq C_k$, where $C_k$ denotes the capacity of the kth TG.

Since our routing scheme does not allow for alternate routes, most of the traffic offered to a route must complete. Thus, to make accurate projections of performance, we must consider fluctuations of TG loads about $\hat{X}_k$. To guard against (upward) fluctuations, we introduce an artificial guard a on TG capacities, and replace $C_k$ by $(C_k - \sigma_k)$;. The exact value of the guard is determined by the specified end-to-end route blocking performance requirements for a TG: the larger the guard, the lower chance of blocking on a TG.

For example, to limit the blocking probability to 2 percent on a TG of size 1000, the guard, according to erlang-B formula is 8. To limit blocking to 1 percent, the guard must be 29. However, if the guard is selected too conservatively, it will result in wasting bandwidth. For our particular (no alternate) routing scheme, the proper value of the TGs' guard is one that guarantees the route end-to-end grade of service.

## JOINT ACCESS-CONTROL AND ROUTING PROBLEM FORMULATION

Having predicted network TG occupancy levels as function of routing variables (Eq. 2) we formulate the network traffic control objective for an updating period T, as an Equilibrium Programming Problem (EPP). This formulation allows for a simple optimization algorithm which is executed, in a centralized or decentralized fashion, at the beginning of each updating period. The solution to the EPP determines the optimal traffic control parameters for the following T minutes; i.e., for $t \epsilon (t_0, t_0 + T)$.

As mentioned earlier, the objective of our EPP formulation is twofold. The first is to maximize the minimum projected TG residual capacity over the network during the next T minutes. That is, the optimal traffic routing variables of the EPP distribute the T-minute-ahead projected offered load over network route sets in a manner to balance the load on network TGs during the next T minutes. Note that balancing the load on network TGs has two desirable effects. The first is that of lowering the probability of blocking on network TGs. By maximizing the minimum TG residual capacity over the network, we provide the maximal "gap" between the average TG occupancies and their respective capacity limits. The second, is that balancing network TG loads also results in load balancing within the switching system serving those TGs.

The second objective of the EPP formulation is to "fairly" reject, at the network entrance, the fraction of SD projected demands which can not be accommodated by the traffic routing variables of the first objective. The second EPP objective achieves this by maximizing the minimum fraction of predicted accommodated traffic across network SD pairs. In this way, the EPP formulation balances the fraction of rejected traffic across SD pairs which are contending over TG capacities. This results in an "equitable" access-control policy.

Before formulating the EPP we recall/introduce some notation:

measured TG occupancy    $z_k(t_0)$

TG fluctuation guard    $\sigma_k$

projected TG occupancy    $X_k(t_0 + T)$

projected SD demand

$$\widehat{\rho}_{ij} = \frac{\widehat{\lambda}_{ij}}{\mu} (1 - e^{-\mu T})$$

Thus, at the beginning of each updating period the following EPP is solved:

EPP: Given the Network topology, SD route sets, effective TG capacities, projected SD demand matrix, for each updating period we formulate:

$$O_R : \max_h F_R(H), \quad F_R(H) = \min_\Omega \left\{ (\widehat{C}_k - \sigma_k) - \widehat{X}_k(t_0 + T) \right\} \quad (4)$$

= minimum predicted TG effective residual capacity (over all network TGs) at $t_0 + T$

$$O_A : \max_h F_A(H), \quad F_A(H) = \min_S \left\{ (1 - h_{ij}^0) \right\} \quad (5)$$

= minimum fraction of predicted accommodated (over all network SD pairs) traffic at $t_0 + T$

$$H = (h^0, h), \quad h^0 = \{h^0_{ij} : i,j \in S\}, \quad h = \{h^1_{ij} : i,j \in S, l \in L(i,j)\}$$

$$h^0_{ij}$$

= Fraction of offered traffic to be rejected from SD pair ij at $t_0 + T$

$$h^1_{ij}$$

= Fraction of offered traffic to be accommodated on

$$r^1_{ij}$$

at $t_0 + T$
subject to:
flow conservation constraints:

$$\sum_{l=1}^{R_{ij}} h^1_{ij} = 1, \quad h^1_{ij} \geq 0. \tag{6}$$

effective capacity constraints (including fluctuation guard):

$F_R(H) \geq 0,$  (7)

and access-control triggering conditions:

$$h^0_{ij} > 0 \text{ if and only if } F_{ij}(H) = 0, \tag{8}$$

where $F_{ij}$ represents maximum of minimum predicted (at $t_0 + T$) TG residual capacity over $L_{ij}$. The last constraint allows for rejection of traffic only when there is no residual capacity available within $L_{ij}$. Note that the objective functions $O_R$ and $O_A$ are coupled through constraints in Eqs. (6-8).

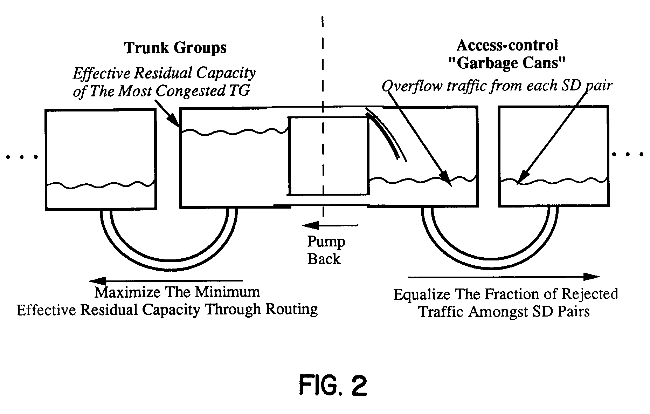

Fig. 2 is a diagrammatic illustration of the interaction between routing and access-control. The series of the buckets 22 on the left represent network TGs, with the right most bucket(s) 24 being the TG with the least effective residual capacity. The overflow from the right most bucket(s) 24 pours into "access-control" buckets 26, with each access-control bucket 26 holding the overflow from one SD pair. Note that in this drawing $O_R$ attempts to increase the residual capacity of the most congested TG by routing some of its flow on to other TGs (to the left). (The total amount of flow in all the buckets equals the projected flow to be accommodated during the next T minutes.)

The objective function $O_A$ on the other hand attempts to pump flow from the access-control buckets 26 back into the TGs. If $O_R$ can not accommodate the pumped back flow through rerouting, this flow will return to the access-control buckets 26. At this point, $O_A$ attempts to equalize the fraction--SD-overflow/projected-SD-demand--across SD pairs contending over the congested (right-most) TG(s).

## SOLUTION ALGORITHM FOR THE EPP

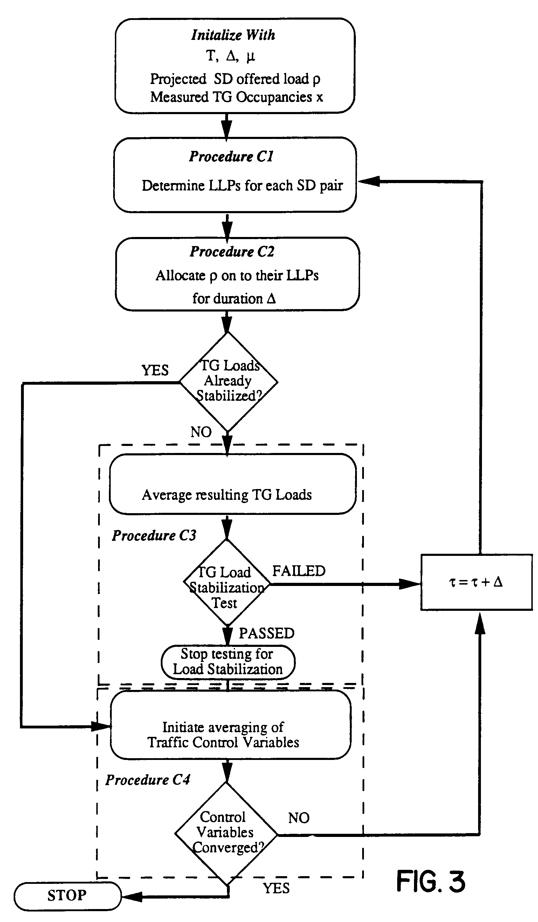

The solution technique can be described as follows. Given the updating interval T, the algorithm step size $\Delta$ (see Procedure C2), the estimated SD arrival rates $\lambda_{ij}$, the service rate $\mu$, and the measured TG occupancy level $z(t_0)$, the solution technique for the EPP is comprised of four simple procedures which are repeated on each iteration m. These four steps are executed in "computer time" $\tau = m\Delta$, where m = 0,1,2,..., until convergence. This is illustrated in Flow Diagram (I), which is Fig. 3:

Procedure C1 - Determination of the Least Loaded Path $LLP_{ij}(\tau)$ for each SD pair ij over its route-set $L_{ij}$. The residual capacity of $LLP_{ij}(\tau)$ is given by

$$F_{ij}(\tau) = \max_{L_{ij}} \min_{r_{ij}} \left\{ (\hat{C}_k - \sigma_k) - \hat{X}_k(\tau) \right\} \qquad (9)$$

Procedure C2 - Allocation of the projected SD offered loads

$$\hat{\rho}_{ij} = \frac{\hat{\Lambda}_{ij}}{\mu} (1 - e^{-\mu T}) \qquad (10)$$

on to SD LLPs for duration D, and computation of the resulting TG loads through

$$\hat{X}_k(\tau+\Delta) = e^{-\Delta} \hat{X}_k(\tau) + \sum_{ij \in S} \left\{ \hat{\rho}_{ij} \sum_{l=1}^{R_{ij}} \theta_{ij}^l(\tau) (\delta_{ij}^l)k \right\} . \qquad (11)$$

If $F_{ij}(\tau)$ is positive, the route indicator function

$$\theta_{ij}^l(\tau)$$

of the $LLP_{ij}$ is set to 1. When $F_{ij}(\tau)$ is zero or negative, the access-control indicator

$$\theta_{ij}^0(\tau)$$

is set to 1.

Procedure C3 - Stabilization detection of projected TG loads (on an iteration) when

$$\max_k \delta x_k < \varepsilon \hat{\Lambda}_k(\tau_1, u) + \varepsilon^* \quad \text{and} \quad \min_k \left\{ (\hat{C}_k - \sigma_k) - \hat{x}_k(\tau_1, u) \right\} \geq 0 \qquad (12)$$

where

10

$$\hat{\bar{x}}_k(\tau_1, u) = \frac{1}{u} \int_{\tau_1}^{\tau_1 + u} \hat{x}_k(\tau) \, d\tau \quad \text{and} \quad \delta x_k = \max_\tau | \hat{x}_k(\tau) - \hat{\bar{x}}_k(\tau_1, u) | \qquad (13)$$

for

$$t \epsilon [\tau_1, \tau_1 + u), \ \tau_1 = m_1 \Delta, \ u = m_2 \Delta, \ m_2 \geq m_1 + 1 \qquad (14)$$

where $m_1$ represents the iteration count when we commence testing for projected TG load stabilization. If m > $m_1$ and the TG loads have $\epsilon$-stabilized, we continue to Procedure C4, otherwise, we increment $\tau$ by $\Delta$ and return to Procedure C1.

Procedure C4 - When the TG flows have stabilized, the optimal traffic control variables

$$h_{ij}^l$$

are computed by recursively averaging the indicator functions of Procedure C1:

$$h_{ij}^l(\tau) = \frac{1}{n} \theta_{ij}^l(\tau) + \frac{(n-1)}{n} h_{ij}^l(\tau - \Delta), \quad n = 1, 2, \dots \qquad (15)$$

where $\tau^*$ indicates TG load stabilization time as defined by C3 and $n = (\tau - \tau^*)/\Delta$. To capture convergence of the traffic control variables to their optimal values, we use a variant on the stabilization rule in C3 with the following modifications on the stopping criterion:

$$\delta x_k = \max_k | \hat{x}_k(\tau + T) - \hat{\bar{x}}_k(\tau_1, u) | \qquad (16)$$

with

$$\hat{x}_k(t + T) = e^{-\mu T} z_k(t) + (1 - e^{-\mu T})/\mu \sum_{ij \epsilon S} \left\{ \lambda_{sd} \sum_{l=1}^{R_{ij}} h_{ij}^l (\delta_{ij}^l)k \right\} \qquad (17)$$

Note that the above algorithm termination indicator is satisfied with any set of

$$h_{ij}^l$$

that approximates the optimal flow on TGs; hence, it is a weaker condition but computationally less expensive than one requiring convergence of individual traffic control variables. From a practical viewpoint, this weaker condition is sufficient since the optimal value of EPP's objective function $F_R$ depends explicitly upon total flow on TGs. Also, note that Procedure C4 is invoked only when the total flow on network TGs has reached its e-optimal value; this substantially accelerates the algorithm.

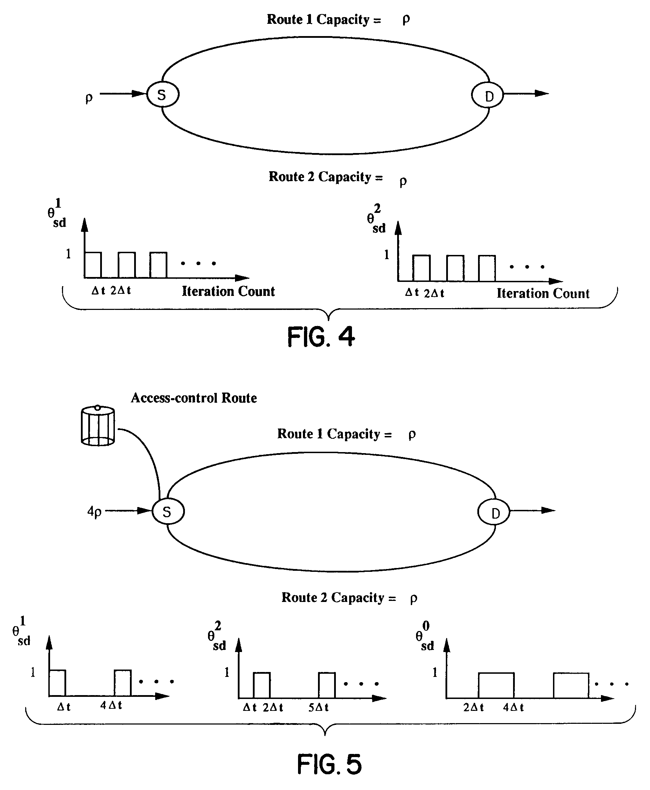

Figs. 4, 5 illustrate the solution technique by applying the EPP to a simple 2-node problem. Two scenarios are considered. (For simplicity, we assume that the two routes connecting nodes A and B are initially empty.) In the first scenario (Fig. 4) the incoming load $\hat{r}$, can be distributed on the two routes in a number of ways. The optimal solution to the EPP however, recommends a half and half split of the incoming traffic between the routes--hence providing maximal gap between the route capacities and their expected occupancy levels.

In the second scenario (Fig. 5), the incoming load is twice the call carrying capacity of the network. The optimal traffic routing variables recommend loading both routes up to their capacity with half the incoming load, while rejecting the other half at source.

## DECENTRALIZED SOLUTION ALGORITHM FOR THE EPP

Many network environments require a decentralized solution technique to the Joint Access-control & Routing problem. For example, networks such as the Defense Switched Network (DSN), are comprised of a number of physically segregated subnets, with each subnet sending to and receiving a significant amount of traffic from other subnets, through gateways. Since the traffic conditions in the subnets are clearly interdependent, their traffic control policies must be likewise. Another example involves large networks where the EPP cannot be solved in real-time using the centralized approach. However, we will shortly present an approach that, by logically partitioning the network into subnets of "manageable" size, we can solve the EPP for each partition in concert --and in parallel--with the other subnets.

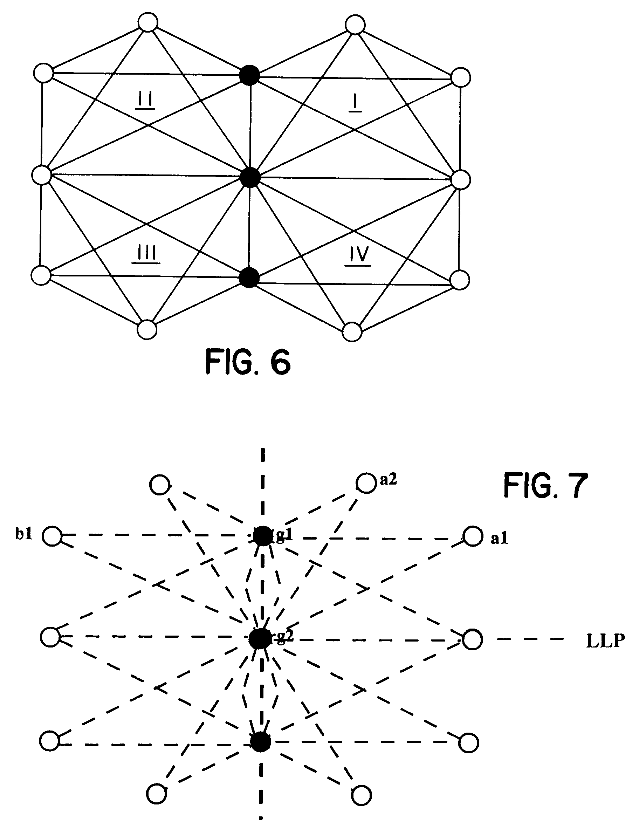

This section demonstrates how one may solve the EPP using a decentralized technique (the proof of convergence of our decentralized solution technique to the network-wide optimum is given in A. Gersht and S. Kheradpir, "Real-time Decentralized Traffic Management Via a Parallel Algorithm," GTE Laboratories Technical Memorandum, November, 1989). To demonstrate this, we first assume that the network is partitioned physically/logically into subnets which are interconnected through a number of gateways/boundary nodes. Fig. 6 is a diagrammatic illustration of a network topology partitioned into four subnets. We then note that, Procedure C1 representing shortest path computations, can be easily decomposed across subnets, and that, Procedure C2, representing projected TG load calculations, can be executed independently for each network TG, when all SD shortest paths (i.e., $q_{ij}^1$ s) are computed by Procedure C1.

Fig. 7 is a diagrammatic illustration of a simplified network topology comprised of simplified subnet topologies. In addition to the physical subnet topology, we introduce the simplified subnet topology which is comprised of direct logical links connected from each subnet node (including gates) to the gates. We then assign, to each logical link, the residual capacity of its corresponding LLP. See Figs. 6, 7. The composition of such simplified subnet topologies represents the simplified network topology.

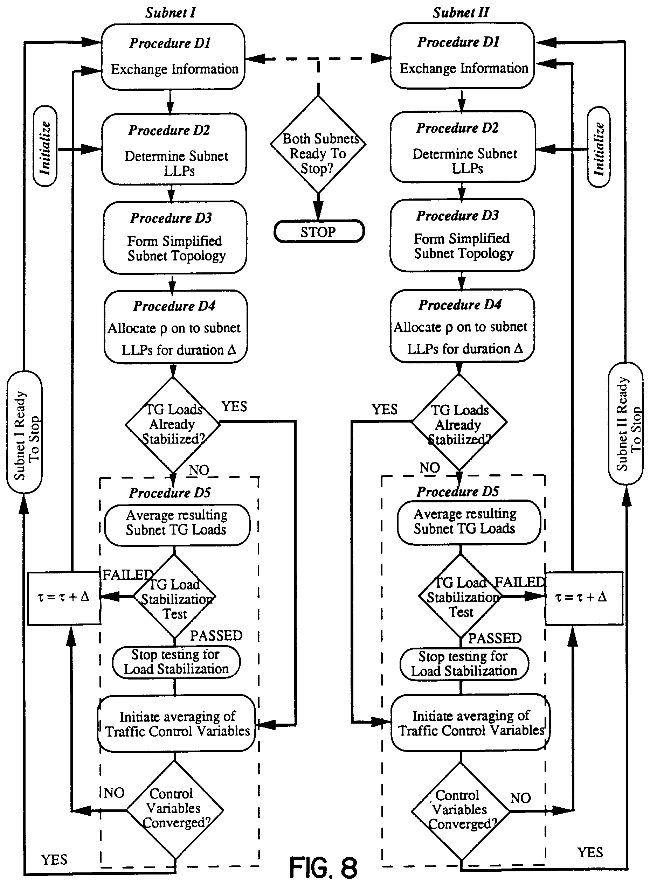

We assign a unique traffic controller to each subnet; the controller has global view of only its subnet states. The responsibility of each subnet controller is to compute its subnet's optimal traffic control variables through an iterative dialog--and in parallel--with other controllers. Accordingly, each subnet controller executes the following procedures, as shown in Flow Diagram II, Fig. 8, on each iteration, until convergence.

Procedure D1 - Exchange of the following two pieces of information with the other subnet controllers:
- Residual capacities of LLPs from its gateways to internal subnet nodes;
- Aggregated offered traffic from each subnet gateway destined to nodes/gateways of other subnets.

Procedure D2 - Execution of Procedure C1 for the subnet (i.e., determination of LLPs for intra-subnet node pairs).

Procedure D3 - Execution of Procedure C1 for the simplified network topology to
- Determine LLPs for inter-subnet SD pairs;
- Determine LLPs for intra-subnet SDs whose routes cross other subnets to reach their destination;
- Compute the aggregate inter-subnet offered traffic from gateways to other subnet destinations/gateways.

Procedure D4 - Execution of Procedure C2 (i.e., calculation of new subnet TG loads).

Procedure D5 - Execution of Procedures C3-C4, convergence tests for the subnet TGs and calculation of the traffic control variables.

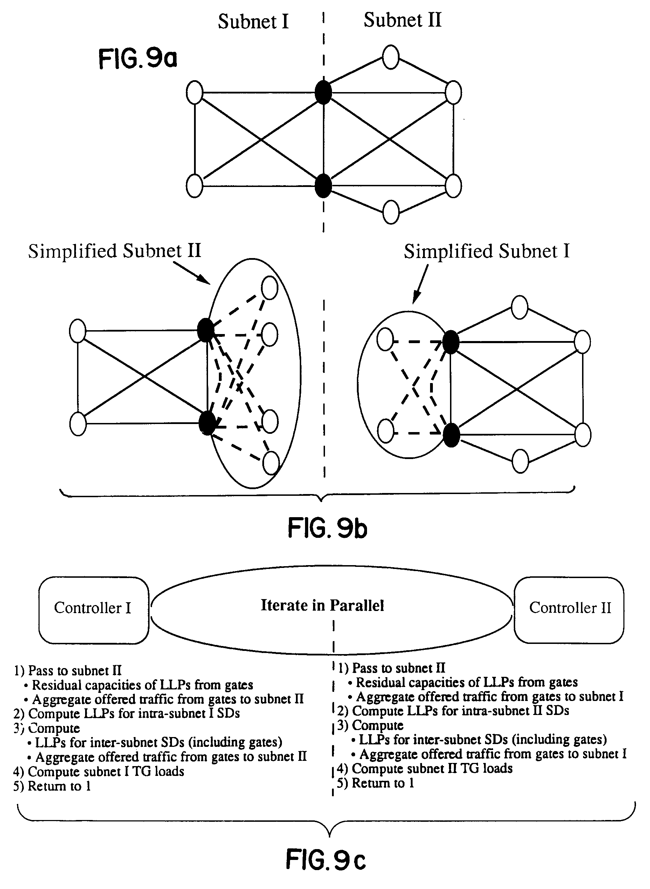

These procedures are illustrated diagrammatically in Figs. 9a, 9b and 9c.

At the termination of the algorithm, each subnet controller has a set of traffic routing variables which determine i) the split of traffic on the subnet route sets for the next T minutes, and ii) the fractions of offered SD traffic to be rejected at the subnet sources. The ensemble of the subnet traffic routing variables form the optimal (as defined by the EPP) access-control and routing policy for the whole network.

The network wide optimality for a given route set follows from the fact that at every iteration, each subnet controller, based upon the simplified network topology, chooses the "globally-correct" route indicator functions as, the other controllers have already computed (and provided) the residual capacities of the LLPs from the gateways to their destinations.

Our algorithm must solve large-scale problems within a few seconds to be effective. In today's network environment state measurements are reported every five minutes. Consequently, for the joint access-control and routing strategy to be effective, the traffic control variables must be implemented in the network within a few seconds after state measurements are received at the NMC. This means that for a 40-node network with 4 routes per SD pair, the EPP's solution algorithm must solve for 6400 routing variables in near real-time. Two attributes of our technique make this possible. If we define one path through C1-C4/D1-D5 procedures as one master iteration, one may assume that the number of master iterations until convergence of the EPP solution algorithm depends only upon TG loads within the network/subnets, and not on the number of routing variables. This hypothesis is based upon the objective function $F_R$ in EPP being dependent only and explicitly on TG loads - and not on the traffic-routing variables [see Eqs. (9) and (11)]. Consequently, we conjecture that the total number of master iterations until convergence does not strongly depend on the number of network nodes. Our preliminary numerical studies support this hypothesis. Moreover, Eqs. (9) and (11) allow for decomposition of the algorithm since for the given route indicator functions, the projected loads can be computed, via Eq. (11), independently for each TG. The second important attribute of our technique involves LLP computations and consequently calculations of route indicator functions. We can decrease the LLP computation time drastically through 1) proper network partitioning, and 2) parallel execution of procedures D1-D5 for each partition on multiprocessor systems. Table I displays the complexity involved in calculating network/subnet LLPs as a function of pertinent variables. The table shows how the computational complexity is related to the number of processors used and the subnet decomposition structure.

These variables are:

- $N$ = number of network nodes
- $n$ = number of subnet nodes
- $s_n$ = maximal number of TGs comprising a route within a subnet
- $s_N$ = maximal number of TGs in route (within the global network)
- $m_c$ = number of subnets (partitions); $m_c = 1$ -> network = subnet $\simeq N/n$
- $m_r$ = maximal number of routes/SD; $m_r = U$ -> no constraints on $m_r$; $m_r = C$-> predefined route-set
- $m_g$ = maximal number of gateways per subnet; $m_g = U$ -> no constraints on the number of gateways
- $m_s$ = maximal number logical links on a route within the simplified topology; $m_s < s_N$
- $m_p$ = number of processors at a subnet; $m_p = 1$ ->no parallel processing within a subnet

## Table I

### Computational Complexity of the EPP Solution Algorithm

| Case | $m_c$ | $m_r$ | $m_g$ | $m_p$ | $m_s$ | Procedure C1/D2 Complexity | Procedure C2/D3 Complexity |
|---|---|---|---|---|---|---|---|
| 1 | 1 | U | | 1 | | $O(N^3)$ | |
| 2 | 1 | C | | N | | $O(m_r s_N N)$ | |
| 3 | 1 | U | | N | | $O(N^2)$ | |
| 4 | 1 | C | | N(N-1) | | $O(m_r s_N)$ | |
| 5 | >1 | U | C | 1 | $m_c$ | $O(n^3)$ | $O(m_c m_g)^3 + O((m_g-1)^c(m_c-1)n^2))$ |
| 6 | >1 | C | U | 1 | $>m_c$ | $O(m_r s_n n^2)$ | $O(m_r(m_c-1)n^2 m_s)$ |
| 7 | >1 | C | U | $(m_c-1)n^2$ | $\geq m_c$ | $O(m_r s_n)$ | $O(m_s m_r)$ |
| 8 | >1 | C | U | $n>1$ | $\geq m_c$ | $O(m_r s_n n)$ | $O(m_r(m_c-1)n m_s)$ |
| 9 | >1 | U | C | $n \geq m_c m_g$ | U | $O(n^2)$ | $O(m_c m_g)^2 + O(m_g(m_g-1)(m_c-1)n)$ |

In order to avoid extensive controller intercommunication delay, we do not allow intercontroller communications during a master iteration. (To avoid this delay, we may alternatively colocate the controllers.)

The results in Table I do not consider the tradeoffs involved in physical placement of subnet controllers, and are constrained by the following two assumptions:

- The controllers are allowed to communicate only at the beginning of each master iteration
- The controllers do not share common memory

The algorithm complexities in Table I are expressed as a product of: i) the total number of master iterations, and ii) the complexity sum of procedures C1/D2 and C2/D3. The total number of master iterations

14

to convergence depends weakly on the network size. Consequently, the complexity of each case is dominated by the complexity of procedures C1/D2 and C2/D3.

Furthermore, note that we can decrease the complexity of procedures C1/D2 and C2/D3 (LLP computations) through parallel processing. For such an implementation a controller represents a multiprocessor system. For example, it is well known that the shortest path algorithm complexity for an N-node network increases as $N^3$ (i.e. case 1). It is also known that the distributed shortest path algorithm implemented on an N-processor system has $O(N^2)$ complexity. As a case in point, consider a an N-node network with $m_r$ predetermined routes per SD pair. In such a case, we can compute all SD LLPs in parallel using N(N-1) processors.

To conclude the section, note that we omitted in this specification some issues important for numerical implementation of the algorithm, like (variable) step size A selection, or proper representation of Eq. 8.

To quantify the performance gained through coordination of controller activities we compared the solution of the decentralized algorithm with the solution arrived at through each subnet controller solving its piece of the problem independently. For the uncoordinated strategy, Procedures D1 and D3 are removed from EPP's decentralized solution algorithm; that is, no information regarding the simplified network topology/inter-subnet loads are exchanged. The only information available to a subnet controller regarding other subnets is the incoming offered traffic from gateways to its subnet nodes.

Network management activities aim to control radical changes in traffic patterns. In our experiments, we need to model radical changes in network traffic conditions since the last update. Such volatile traffic conditions may arise due to unanticipated change in the offered traffic patterns or network failures. To simplify our experimental efforts, we consider only one updating period, as opposed to a general sequence of interdependent periods. To capture the effect of such radical changes (since the last update), the inter-subnet loads are randomly distributed across gateways to remove inter-period dependence.

Our decentralized EPP algorithm has been tested under a variety of network scenarios. however, due to the space limitation we describe only one simulation example illustrating the benefits of cooperative traffic management. In the following example, we compare the network performance of (1) when the EPP is solved independently for each subnet (i.e., uncoordinated traffic control) to (2) when subnet controllers cooperate to solve the EPP in parallel for the total network (i.e., coordinated traffic control).

In Fig. 5a we partition a 7-node network into two logical subnets connected by gateway nodes 2, 3, and 6. The network traffic has exponential interarrival and holding times, and is composed of both inter-SD and intra-SD traffic, SD pairs (1,0), (0,1), (5,4), and (4,5) make up the intra-subnet traffic, while SD pairs (0,4), (0,5)), (1,4), and (1,5) , make up the inter-subnet traffic. Under normal operating conditions, SD pairs allocate most of their traffic on "shortest path" routes. The traffic scenario is as follows: at approximately 60,000 simulation time units, we introduce an overload from node 4 to node 5. To accommodate this overload subnet controller 2 must use all TG circuits on routes 4-5, 4-2-5, and 4-3-5. In this way all TGs in subnet 2 connected to gateways 2 and 3 will be saturated. That is, unless subnet controller 1 reroutes its inter subnet traffic to gateway 6, there will be significant blocking on TGs connected to gateways 2 and 3. This phenomena is displayed by the simulation curves in Fig. 5b which indicate the percentage of calls served during each updating interval. Note the significant blocking levels in subnet 2 in the case of uncoordinated control.

In the coordinated case, subnet controller 1 instructs nodes 0 and 1 to route all their inter-subnet traffic to gateway 6, thus avoiding contention with SD (4,5). However, to get node 0 traffic to node 6, controller 1 routes all (0,1) and (1,0) traffic on the alternate route (1-2-0). Fig. 5c demonstrates that the overall network performance suffers minimally when subnet controllers 1 and 2 are coordinated.

An important feature of our EPP formulation is that it can be decomposed into a number of subproblems which may be solved--in parallel--by an equal number of inter-communicating subnet controllers. Furthermore, each subnet controller may solve its piece of the problem using parallel processors; that is, the EPP may be decomposed into a hierarchy of subproblems solved in parallel. The exact parallel architecture would be dependent upon such factors as inter-controller-transmission delay and cost-to-performance ratio. By subnet controllers assuming responsibility for traffic control of their own region, the decentralized implementation of our scheme leads to a decentralized network traffic control structure.

In this specification, we formulated the joint access- control and routing problem as an Equilibrium Programming Problem. The strategy, for a given updating period decreases call blocking/balances net work load by maximizing network residual capacity, and fairly rejects demand which i s expected to exceed network capacity, at the source. The EPP formulation allows for (1) decentralized implementation of the joint access-control and routing problem; and ( 2) massive introduction of parallel processing in the optimization procedure to satisfy real-time requirements. The computational complexity decreases proportionally with the number of processors used. The convergence of the decentralized algorithm to the global optimum is proven.

Our simulation results show that better utilization of network resources results when the subnet controllers solve the EPP in a coordinated manner than when each piece of the EPP is solved independently. The gain in performance becomes more significant as traffic conditions become more volatile. Our algorithm complexity analysis and numerical results show that our algorithm is a good candidate for real-time implementation on large/physically segregated networks.

Our numerical complexity analysis and results show that our algorithm is a good candidate for real-time implementation on large/physically segregated networks.

The preferred embodiment and best mode of practicing the invention has been disclosed. Variations and modifications will be apparent to those skilled in the art in view of these teachings. Accordingly, the scope of the invention is to be determined by the following claims.

**Claims**

1. A network characterized by real time decentralized state dependent traffic management, comprising:

    interconnected subnets; and

    a plurality of traffic controllers, each traffic controller periodically collecting real time state measurements including residual capacities and predicted offered traffic on a corresponding subnet in isolation from the remaining subnets for an upcoming time period;

    said traffic controllers intercommunicating data representing residual capacities and offered traffic at the end of a time period;

    intercommunicationg data representing minimum of residual capacity of least congested route between each source-destination pair within each subnet and predicted offered traffic at the end of a time period;

    said traffic controllers computing, by inclusion of said data, traffic control variables for joint access and routing for their corresponding subnet, thereby handling incoming calls for a following time period.

2. A method for real time decentralized state dependent traffic management of a network divided into subnets, comprising the steps of:

    periodically collecting real time state measurements including residual capacities and predicted offered traffic on a corresponding subnet in isolation from the remaining subnets for an upcoming time period;

    intercommunicating data between subnets representing minimum of residual capacity of least congested route between each source-destination pair within each subnet and predicted offered traffic at the end of a time period; and

    computing, by inclusion of said data, traffic control variables for handling arriving calls joint access and routing for each subnet, thereby handling incoming calls for a following time period.

**Incoming Demand**

**Subnet**

**Routes**

(S) → (D)

T = Sampling
Interval

*Route/Access-control*

*Telecommunication Management Network (TMN)*

**Measured TG
Occupancies**

**Prediction &
Optimization
Module**

**Filtering Module**

**Measured
Arrival Rates**

*Subnet Management Center (SMC)*

# FIG. I

**Trunk Groups**

*Effective Residual Capacity
of The Most Congested TG*

**Access-control
"Garbage Cans"**

*Overflow traffic from each SD pair*

Pump
Back

Maximize The Minimum
Effective Residual Capacity Through Routing

Equalize The Fraction of Rejected
Traffic Amongst SD Pairs

**FIG. 2**

FIG. 3

**FIG. 4**

**FIG. 5**

FIG. 6

FIG. 7

FIG. 8

Subnet I | Subnet II

**FIG.9a**

Simplified Subnet II

Simplified Subnet I

**FIG. 9b**

Controller I

**Iterate in Parallel**

Controller II

1) Pass to subnet II
  • Residual capacities of LLPs from gates
  • Aggregate offered traffic from gates to subnet II
2) Compute LLPs for intra-subnet I SDs
3) Compute
  • LLPs for inter-subnet SDs (including gates)
  • Aggregate offered traffic from gates to subnet II
4) Compute subnet I TG loads
5) Return to 1

1) Pass to subnet II
  • Residual capacities of LLPs from gates
  • Aggregate offered traffic from gates to subnet I
2) Compute LLPs for intra-subnet II SDs
3) Compute
  • LLPs for inter-subnet SDs (including gates)
  • Aggregate offered traffic from gates to subnet I
4) Compute subnet II TG loads
5) Return to 1

**FIG.9c**

FIG. 10a

FIG. 10b-1

FIG. 10b-2

FIG. 10b-3

FIG. IOc-I

FIG IOc-2

FIG. IOc-3